# EUROPÄISCHE PATENTSCHRIFT

(11) **EP 1 199 182 B1**
(45) Veröffentlichungstag und Bekanntmachung des Hinweises auf die Patenterteilung: **28.03.2007**
(21) Anmeldenummer: 01123394.7
(22) Anmeldetag: 11.10.2001
(51) Int. Cl.: B41J 13/26, H04N 1/387, G03G 15/00, G06K 15/02, B41J 11/00, B41J 11/66

(54) **Verfahren zum automatischen Festlegen des Layouts**
Method for automatically determining a layout
Méthode de détermination automatique de mise en page

(30) Priorität: 18.10.2000 US 691332
(43) Veröffentlichungstag der Anmeldung: 24.04.2002
(73) Patentinhaber: EASTMAN KODAK COMPANY, Rochester, New York 14650 (US)
(72) Erfinder: Housel, Edward M., Rochester, NY 14624 (US)
(74) Vertreter: Wagner & Geyer

(56) Entgegenhaltungen:
- EP-A- 0 478 970
- EP-A- 0 889 637
- EP-A- 0 913 265
- US-A- 5 129 639
- US-A- 5 651 618
- US-A- 6 118 467
- BELL C J: "MEANS TO MAXIMIZE PRINTED AREA IN INK JET PRINTERS" , XEROX DISCLOSURE JOURNAL, XEROX CORPORATION. STAMFORD, CONN, US, VOL. 25, NR. 2, PAGE(S) 71 XP001058577 * Seite 1 *
- PATENT ABSTRACTS OF JAPAN vol. 1999, no. 11, 30. September 1999 (1999-09-30) -& JP 11 170676 A (DAINIPPON SCREEN MFG CO LTD), 29. Juni 1999 (1999-06-29)
- PATENT ABSTRACTS OF JAPAN vol. 018, no. 083 (M-1558), 10. Februar 1994 (1994-02-10) -& JP 05 293794 A (RICOH CO LTD), 9. November 1993 (1993-11-09)

## Beschreibung

Die vorliegende Erfindung betrifft ein Verfahren zum automatischen Durchführen der Berechnungen, die normalerweise von einem Druckerbediener durchgeführt werden, um ein Layout für einen Druckauftrag zu erstellen, um die Lage des gedruckten Bildes auf dem Papiermaterial zu optimieren, beispielsweise so, dass beim Bedrucken von Materialien, die größer als die gewünschte endgültige Größe des Bildes sind, wenig Verschnitt bleibt. Insbesondere betrifft die Erfindung das automatische Festlegen des Layouts bezüglich der Bildgröße und Bildposition auf der Seite derart, dass sogar beim Duplex-Drucken das Ausmaß der dem Druckvorgang nachfolgenden Arbeitsschritte, wie das Beschneiden, minimiert wird.

Die Erfindung betrifft eine Vorrichtung und Verfahren zum Anfertigen gedruckter Bilder auf Papiermaterial. Zur Verdeutlichung können die vier Kanten dieses Papiermaterials in der vorliegenden Beschreibung gemäß der Transportrichtung durch den Drucker mit Vorderkante, Hinterkante und zwei Seitenkanten bezeichnet werden. Die Druckausgabe wird als Druckbereich bezeichnet, der durch die Länge und Breite des fertig gedruckten Produkts nach dem Zuschneiden bestimmt ist.

Viele digitale Drucker und Kopierer sind in der Lage, ein fertiges Produkt zu erstellen, das das Aussehen von Dokumenten aufweist, wie sie mit druckfarbengestützter Offset-Drucktechniken erzeugt werden. Derartige Ausgaben umfassen Broschüren usw. in denen der Kunde wünscht, dass die gesamte Seite bedruckt wird, also ohne dass unbedruckte Ränder oder Kanten verbleiben. Eine Möglichkeit, derartige Dokumente zu erzeugen, besteht darin, auf übergroßem Material zu drucken und die vier unbedruckten Kanten von der Druckausgabe abzuschneiden, um das fertige Produkt zu erstellen. Dieses Verfahren erzeugt ein annehmbares Produkt und kann tatsächlich von einigen Kunden gewünscht werden. Allerdings ist hierzu ein zusätzlicher Produktionsschritt erforderlich, für den ein Bediener zur Schlussverarbeitung eine Schneidvorrichtung einrichten und die gedruckte Ausgabe auf die gewünschten Maße des fertigen Produkts zuschneiden muss. Neben den damit verbundenen, zusätzlichen Arbeitskosten und Arbeitszeiten erhöht sich durch den zusätzlichen Bedienvorgang die Fehleranfälligkeit, was hohe Kosten verursachen kann, wenn durch einen Fehler die ganze vorher geleistete Arbeit zunichte gemacht wird.

Zum Einrichten eines Druckauftrags, der nach dem Drucken zugeschnitten wird, muss der Bediener ein Layout berechnen, bei dem das Bild mittig angeordnet wird, so dass der gleiche Rand an der Vorderkante und an der Hinterkante auf der Vorder- und Rückseite der Seite verbleibt, wenn der Teil abgeschnitten wird, der außerhalb des Randes an beiden Kanten verbleibt. Weitere Probleme treten auf, wenn er ein nicht standardmäßiges Format bedrucken muss, beispielweise der Größe 7 x 9 Zoll (17,78 x 22,86 cm), anstatt 8,5 x 11 Zoll (21,59 x 27,94 cm). Die Situation ist dann besonders problematisch, wenn der Auftrag auf größerem Material gedruckt werden muss, als der Kunde als fertiges Produkt erhalten möchte. In diesem Fall muss der Bediener eine komplexe Auslegung vornehmen, indem er die erforderliche Bildverschiebung manuell berechnet, die notwendig ist, um das Bild in der entsprechenden Position auf dem Material anzuordnen. Beim einseitigen Drucken (Simplex-Drucken) muss der Bediener das Bild nur über einen erzwungenen Druckerrand verschieben, beispielsweise um einen erzwungenen Rand von 1/10 Zoll (0,254 cm) an der Vorderkante des Bogens, um das Papier anschließend an allen vier Kanten auf die gewünschte Größe zuzuschneiden. Beim beidseitigen Drucken (Duplex-Drucken) muss das Bild jedoch derart verschoben werden, dass das Bild auf der ersten Seite des Bogens und das Bild auf der zweiten Seite des Bogens im selben Bereich zusammen fallen, so dass kein Bild auf einer der beiden Seiten beim Zuschneiden zerstört wird. Beim Drucken eines Bildes der Größe 7 x 9 Zoll (17,78 x 22,86 cm) auf Papier der Größe 8,5 x 11 Zoll (21,59 x 27,94 cm) würde diese Berechnung beispielsweise das Verschieben des Bildes von jeder Kante umfassen, d.h. Verschieben des x-Ursprungs um (8,5 - 7)/2 Zoll ((21,50 - 17,78)/2 cm) und des y-Ursprungs um (11 - 9)/2 Zoll ((27,94 - 22,86)/2 cm)). Die Druckausgabe muss dann zugeschnitten werden, um den Teil des Papiers zu entfernen, der außerhalb dieser Verschiebewerte liegt. Die bei derartigen Auslegearbeiten erforderlichen Berechnungen müssen aufbewahrt, niedergeschrieben und dem für das Zuschneiden zuständigen Bediener zusammen mit der fertigen Druckausgabe übergeben werden. Der für das Zuschneiden zuständige Bediener muss dann die Schneidemaschine auf die Berechnungen einrichten, sonst wird die fertige Druckausgabe falsch zugeschnitten, was die gesamte vorausgehende Druckarbeit zunichte machen würde. Jeder Schritt beim Bestimmen des Layouts und bei der Einrichtung der Schneidemaschine ist zeitaufwändig, arbeitsintensiv und potenziell fehleranfällig.

Viele hochwertige Drucker und Kopierer sind in der Lage, "kantenbündig" zu drucken, d.h. sie lassen sich so einrichten, dass sie das Papiermaterial bis zur äußersten Kante bedrucken können. Aufgrund von Qualitätsüberlegungen ermöglichen jedoch viele elektrofotografische Markiervorrichtungen kein vollformatiges Drucken an allen vier Kanten des Materials. Diese Qualitätsüberlegungen beziehen sich vorwiegend auf die Haftung des Toners an der Vorderkante des Materials. Vor dem Fixieren wird der Toner auf dem Papier durch elektrostatische Kräfte gehalten. Der Toner haftet jedoch an den Kanten des Materials nicht so gut, insbesondere weil er vom Papier abgeworfen werden kann, wenn die Vorderkante von den Fixierwalzen ergriffen wird. Wenn die Vorderkante in die Fixierwalzen eintritt, kann es zu Wischeffekten oder anderen Problemen kommen, die sich in einer schlechten Druckqualität niederschlagen. Um derartige Probleme zu vermeiden, lassen viele Drucker nur das kantenbündige Drucken an der Hinterkante und an den Seitenkanten zu, während ein Druckrand an der Vorderkante erzwungen wird. Beim Duplex-Drucken fällt jedoch die Vorderkante der ersten Seite des Bogens nicht mit der Vorderkante der zweiten oder Rückseite des Bogens zusammen. Die Vorderkante der ersten Seite des Bogens wird zur Hinterkante der zweiten Seite des Bogens. Dadurch wird es unmöglich, den Bogen bis zur Grenze des erzwungenen Randes an der Vorderkante auf beiden Seiten des fertigen Produkts zu bedrucken, da das Zuschneiden einen Teil des Bildes auf jeder Seite des Bogens entfernen würde.

Indem die Fähigkeit der besagten Drucker genutzt wird, den Bogen kantenbündig zu bedrucken, ist es möglich, den Druckbereich auf der Seite derart zu positionieren, dass das Zuschneiden nach dem Drucken minimiert wird. In einigen Fällen muss hierzu nur das Bild mittig zwischen der Vorder- und Hinterkante angeordnet werden, während an den Seitenkanten bis zur äußersten Kante bedruckt wird, wodurch sich das Zuschneiden nur noch auf zwei Seiten beschränkt. Ein derartiger Ansatz ist sowohl für das einseitige als auch für das beidseitige Bedrucken verwendbar. Beim einseitigen Bedrucken kann es möglich sein, die Hinterkante und die beiden Seitenkanten kantenbündig zu bedrucken, und nur die Vorderkante zu beschneiden.

Zudem ist es möglich, die verfügbaren, unterschiedlich großen Materialien zu verwenden und das Material auszuwählen, auf das die Druckfläche optimal passt. Indem man die Fähigkeit des Druckers nutzt, kantenbündig zu drucken, und zwar in Verbindung mit der Fähigkeit, das Bild zu verschieben und zu drehen, ist es möglich, die Lage des Bildes auf dem Bogen zu optimieren. Das Optimieren der Lage des Bildes auf dem Bogen umfasst in diesem Zusammenhang die Minimierung von Zuschneidearbeiten nach dem Drucken sowie andere Vorteile der Erfindung, wie die Möglichkeit, Druckaufträge auf verfügbaren Materialien zu verarbeiten, indem man die Lage des Bildes auf dem Bogen verändert.

Ein Verfahren gemäss dem Oberbegriff des Anspruchs 1 ist bekannt aus EP 0889637 A.

Unter Berücksichtigung der dem Stand der Technik und der gängigen Praxis entsprechenden Nachteile besteht Bedarf nach einem Drucker, der die Fähigkeit aktueller Drucker, Material kantenbündig zu drucken, nutzt, und der die notwendigen Auslegeberechnungen automatisch durchführt. Der Erfindung liegt daher die Aufgabe zugrunde, die Fähigkeit derartiger Drucker, Bögen bis zur äußersten Kante zu bedrucken, zu nutzen, und den Druckbereich auf dem Bogen so anzuordnen, dass das Zuschneiden nach dem Bedrucken minimiert wird.

Weiterhin liegt der Erfindung die Aufgabe zugrunde, die verfügbaren, unterschiedlich großen Materialien zu verwenden und das Material auszuwählen, auf das die Druckfläche optimal passt, beispielsweise ggf. durch Drehen des Druckbereichs und durch Anordnen des Druckbereichs derart, dass das Zuschneiden nach dem Bedrucken minimiert wird.

In einem bevorzugten Ausführungsbeispiel umfasst die Erfindung ein Verfahren zum automatischen Auslegen eines Druckauftrags auf einem Drucker, der mit einer Vielzahl verfügbarer Materialgrößen bestückt ist, wobei der Druckauftrag einen bezeichneten Druckbereich umfasst, der durch die bezeichnete Länge und Breite der fertigen Druckausgabe bestimmt ist. Das Verfahren umfasst die folgenden Schritte: Einrichten des Druckauftrags, wobei der Druckauftrag Daten zur Bezeichnung der Länge und Breite der fertigen Druckausgabe umfasst, Ermitteln, ob der Druckbereich kleiner als eine verfügbare Materialgröße ist, und Befähigen des Druckers, kantenbündig zu drucken. Dann ermittelt das System, ob der Druckbereich gedreht werden muss, um den Druckbereich in die verfügbare Materialgröße einzupassen, und berechnet automatisch die Entfernung und Richtung, in der der Druckbereich verschoben werden muss, um den Druckbereich auf dem Material in einer Weise zu positionieren, dass das Zuschneiden nach dem Bedrucken minimiert wird. Zuletzt wird der Druckauftrag mit der berechneten Bildbereichsverschiebung und Bildbereichsdrehung gedruckt.

In einem Ausführungsbeispiel der Erfindung wird das Verfahren benutzt, um einen einseitigen Druckauftrag auszulegen, während in einem anderen Ausführungsbeispiel das Verfahren benutzt wird, um einen beidseitigen Druckauftrag auszulegen. In einem weiteren Ausführungsbeispiel umfasst das Verfahren den zusätzlichen Schritt, einen Anweisungsbogen zu drucken, der den Druckauftrag begleitet, und der Anweisungen zum Einrichten einer Zuschneidevorrichtung zur Durchführung der notwendigen Zuschneideoperationen auflistet.

Die Erfindung wird im folgenden anhand in der Zeichnung dargestellter Ausführungsbeispiele näher erläutert.

Es zeigen
- Fig. 1: eine schematische Darstellung der Architektur einer erfindungsgemäßen Vorrichtung;
- Fig. 2: ein Ablaufdiagramm zur Darstellung der Funktion der Software, die in der vorliegenden Erfindung für das einseitige Drucken Verwendung findet;
- Fig. 3: ein Ablaufdiagramm zur Darstellung der Funktion der Software, die in der vorliegenden Erfindung für das beidseitige Drucken Verwendung findet.

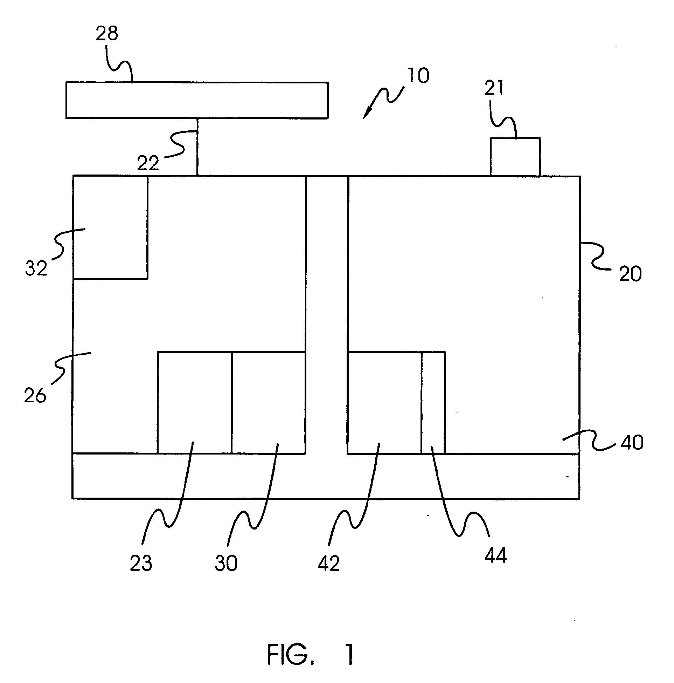

Fig. 1 zeigt eine typische, erfindungsgemäße Druckvorrichtung 10, die einen Drucker 20 umfasst, der mit einem Bedienpult 21 ausgestattet ist sowie mit einer Netzschnittstelle 22, die den Drucker 20 mit einem Netz 28 verbindet. Zwar ist die als Ausführungsbeispiel dargestellte, erfindungsgemäße Druckvorrichtung 10 eine vernetzte Druckvorrichtung, die darauf ausgelegt ist, entfernte Eingaben über eine Netzverbindung zu erhalten, aber auch andere Konfigurationen sind innerhalb des Umfangs und Geltungsbereichs der vorliegenden Erfindung vorgesehen und möglich. Beispielsweise könnte die Druckvorrichtung ein eigenständiger Drucker sein, der einen Scanner zur Seitenerfassung vor Ort beinhaltet. Zudem könnte der Drucker an einer Abtast-Arbeitsstation angeschlossen sein, wobei die berechnete Auslegung darstellbar ist, um durch einen nachgeschalteten Bediener freigegeben zu werden. Obwohl in der vorliegenden Schrift eine bestimmte Druckerkonfiguration besprochen wird, ist die vorliegende Erfindung selbstverständlich auch in anderen Druckvorrichtungen und Konfigurationen verwertbar.

Der Drucker 20 umfasst einen Rasterbildprozessor 26, der aus dem Netz 28 eingehende Daten empfängt. Der Rasterbildprozessor 26 umfasst die Verarbeitungseinheit 30, die Steuerbefehle und Daten aus dem Netz 28 empfängt. Die Steuerbefehle werden von der Verarbeitungseinheit 30 in Maschinenkontrollsprache umgesetzt, während eingehende Druckaufträge und Programme in einem Druckauftragsspeicher 32 abgelegt werden.

Der Drucker 20 umfasst zudem eine Markierungseinrichtung 40, die eine Vielzahl verfügbarer Materialanlagen umfasst sowie andere, übliche Einrichtungen zur Papierhandhabung und -verarbeitung, beispielsweise zum Erzeugen gedruckter Bilder auf Ausgabepapier. Die Markierungseinrichtung 40 empfängt einen Datenstrom und speichert diesen in einem Mehrseiten-Bildspeicher 23 ab, wobei der Datenstrom Bilddaten und Steuerdaten umfasst, die von der Verarbeitungseinheit 30 erzeugt werden. Die Bilddaten werden verarbeitet und an einen Druckkopf 42 zur Übertragung auf die Ausgabebögen übergeben. In einem bevorzugten Ausführungsbeispiel ist der Druckkopf mit einer Vielzahl von Leuchtdioden 44 (LEDs) ausgestattet, die als Druckkopf-Lichtquelle dienen. Wenn ein Druckauftrag zur Markierungseinrichtung 40 gesendet wird, sprechen Steuerbefehle des Rasterbildprozessors 26 eine Untermenge an Leuchtdioden 44 an, die Licht abstrahlen. Indem Leuchtdioden 44 außerhalb einer bestimmten Grenze deaktiviert werden, entwerfen die Druckkopfsteuerbefehle die Außengrenzen und die Parameter des gedruckten Bildes.

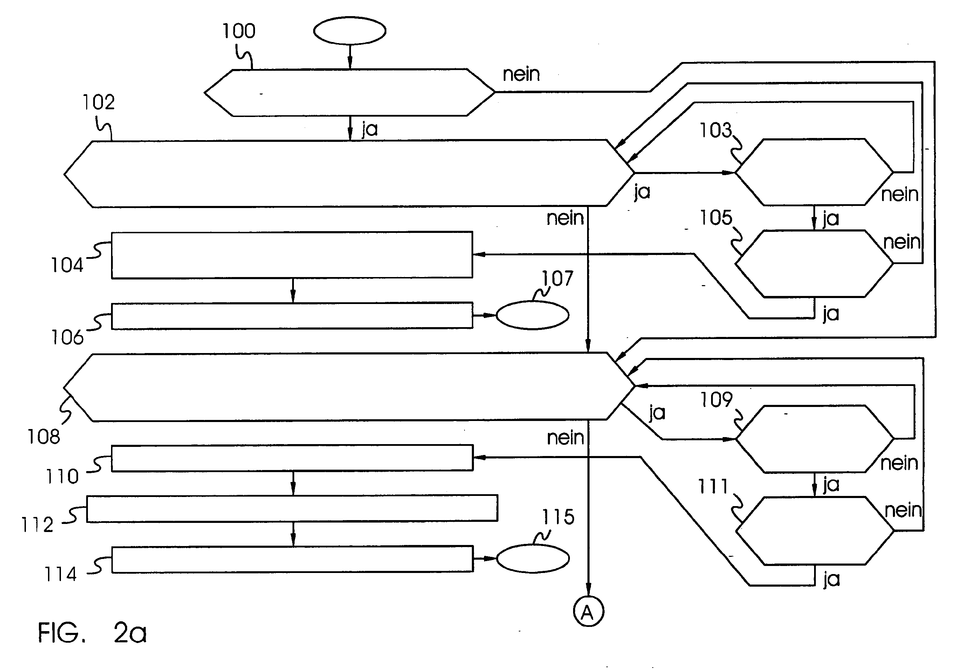

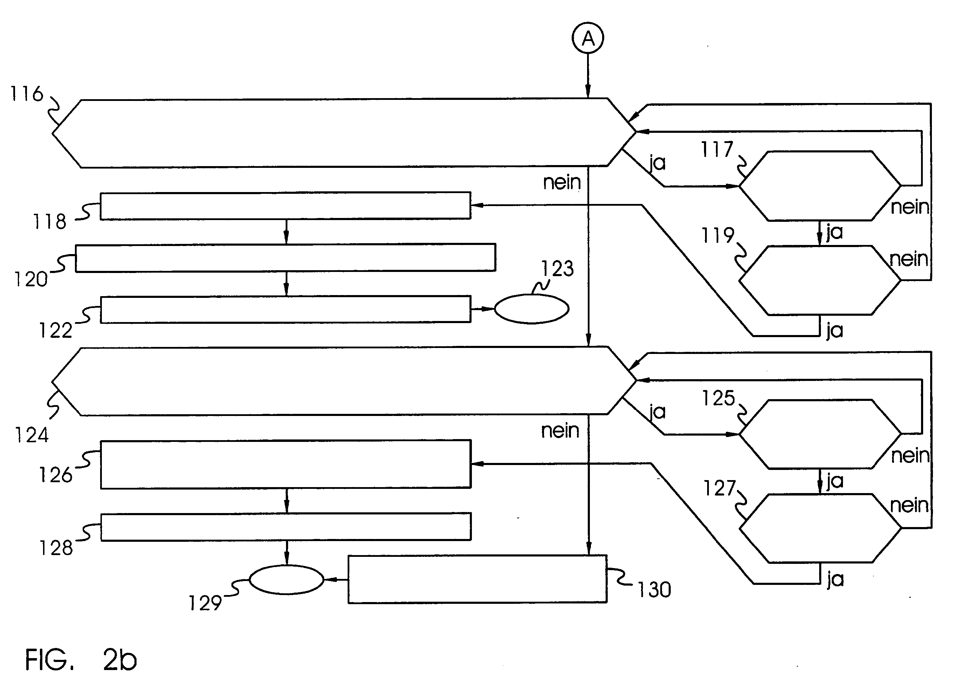

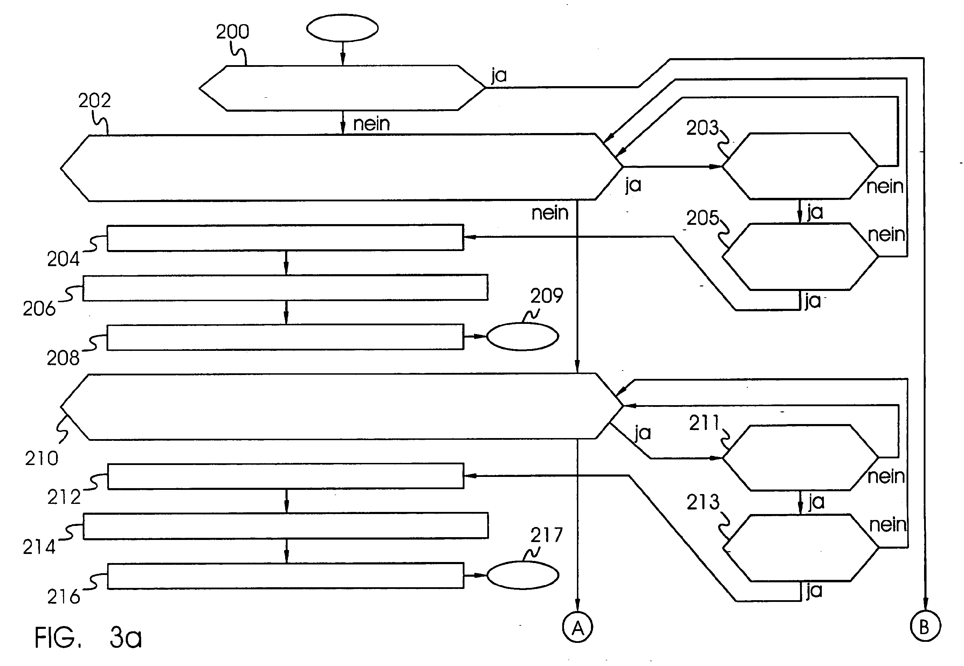

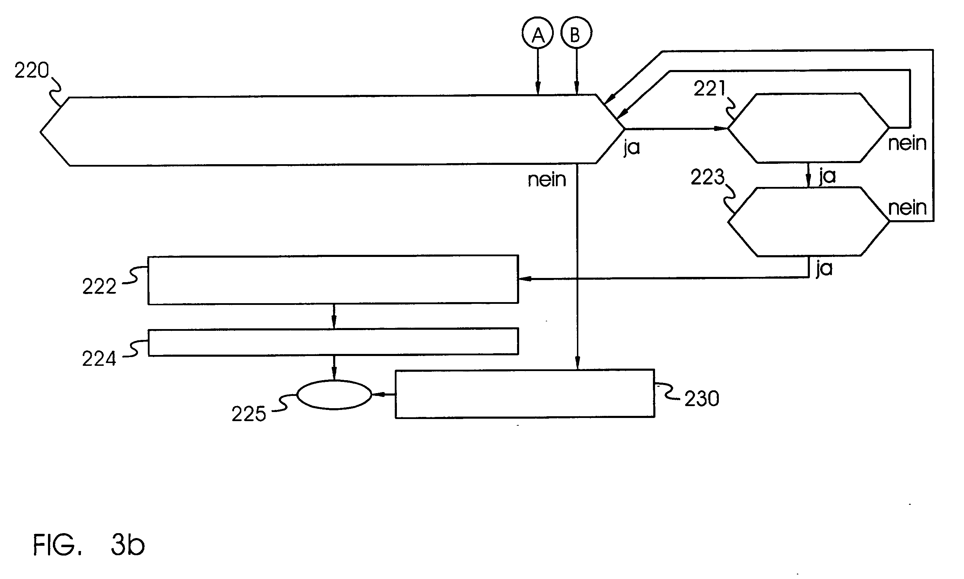

Das erfindungsgemäße Verfahren wird anhand der Ablaufdiagramme aus Fig. 2 und 3 dargestellt. Wenn ein Druckauftrag über das Netz 28 an den Drucker 20 übergeben wird, gibt der Auftraggeber Informationen ein, die eine Reihe von Eigenschaften des Druckauftrags bestimmen, u.a. die gewünschte Größe der endgültigen Druckerausgabe nach Drucken und Zuschneiden, beispielsweise 8,5 x 11 Zoll (21,59 x 27,94 cm) oder 7 x 9 Zoll (17,78 x 22,86 cm). Weiterhin gibt der Auftraggeber an, ob es sich bei dem Druckauftrag um einen Simplex-Druck, d.h. einseitigen Druck, oder um einen Duplex-Druck, d.h. beidseitigen Druck, handelt. Wenn der Auftraggeber einen Simplex-Druck wählt, wird die durch das Ablaufdiagramm aus Fig. 2 dargestellte Software aktiviert. Wenn der Auftraggeber einen Duplex-Druck wählt, wird die durch das Ablaufdiagramm aus Fig. 3 dargestellte Software aktiviert. Diese beiden Alternativen werden nachfolgend besprochen, wobei in der nachfolgenden Besprechung der Begriff "Xf" die gewünschte Breite des fertigen, ausgegebenen Papier bezeichnet, während "Yf" die gewünschte Länge des fertigen, ausgegebenen Papier bezeichnet. Gemeinsam bestimmen Xf und Yf einen auf das gewählte Material zu druckenden Bildbereich.

Wenn der Auftraggeber, wie in Fig. 2 gezeigt, einen Simplex-Druck wählt, umfasst das erfindungsgemäße Verfahren den Schritt 100, in dem ermittelt wird, ob der Kunde wünscht, dass alle vier Kanten des Papier zugeschnitten werden sollen. Falls die Antwort auf Schritt 100 positiv ausfällt, erfolgt in Schritt 102 der Vergleich der Maße von Xf und Yf mit dem in dem Drucker vorhandenen Papier, worauf ermittelt wird, ob der durch Xf und Yf bestimmte Bereich auf das vorhandene Material passt, und zwar unter Berücksichtigung des doppelten Druckerrandes, um die Lage des Bildbereichs auf dem Material zu optimieren. Falls die Antwort auf Schritt 102 positiv ausfällt, erfolgt in Schritt 103 eine Abfrage, um zu ermitteln, ob die Attribute des Materials, abgesehen von der Größe, den Materialattributen entsprechen, die beim Einrichten des Druckauftrags eingegeben worden sind. Falls die Antwort auf Schritt 103 positiv ausfällt, wird in Schritt 105 das gewählte Material angezeigt und gewartet, dass der Bediener vor dem weiteren Fortfahren eine Antwort eingibt. Wenn der Bediener in Schritt 105 eine negative Antwort eingibt, werden die Schritte 102, 103 und 105 so lange wiederholt, bis der Bediener in Schritt 105 eine positive Antwort eingibt, wobei in Schritt 104 das Bild auf dem gewählten Material gedruckt wird, und zwar unter Verwendung der entsprechenden Bildverschiebung und, falls notwendig, der entsprechenden Bilddrehung. In Schritt 106 wird eine Meldung mit Anweisungen zum Zuschneiden der vier Seiten des Papiers angezeigt. Die Anweisungen werden von dem Rasterbildprozessor erzeugt und umfassen die Entfernung und die Richtung, in der das Bild verschoben wurde. In einem bevorzugten Ausführungsbeispiel werden die Zuschneideanweisungen auch auf einen Nachspann gedruckt, der den fertigen Druckauftrag zur Offline-Schneidemaschine begleitet. In einem anderen bevorzugten Ausführungsbeispiel können die Zuschneideanweisungen an eine Inline-Schneidemaschine gesendet werden, die mit dem Drucker verbunden ist. Der Bediener der Schneidemaschine kann zum Einrichten der Schneidemaschine auf den Anweisungsbogen zurückgreifen. In Schritt 107 wird der Abschluss des Druckauftrags freigegeben.

Wenn die Antwort auf Schritt 100 oder auf Schritt 102 negativ ausfällt, wird in Schritt 108 gefragt, ob das Maß Yf dem Quermaß eines der verfügbaren Materialien entspricht, und ob Xf um mindestens das Doppelte des Druckerrandes kleiner als die Vorderkante des Papiers ist. Der Begriff "Quermaß" bezieht sich auf die Länge der Seitenkanten des Papiers und nicht auf die Vorderkante. Wenn die Antwort auf Schritt 108 positiv ausfällt, wird in Schritt 109 gefragt, ob die Attribute des Materials, mit Ausnahme der Größe, den Materialattributen entsprechen, die beim Einrichten des Druckauftrags eingegeben worden sind. Wenn die Antwort auf Schritt 109 positiv ausfällt, wird in Schritt 111 das ausgewählte Material angezeigt, und es wird gewartet, bis der Bediener eine Antwort eingibt. Wenn der Bediener auf Schritt 111 eine negative Antwort eingibt, werden die Schritte 108, 109 und 111 so lange wiederholt, bis der Bediener in Schritt 111 eine positive Antwort eingibt, wobei Schritt 110 den Drucker befähigt, "kantenbündig" zu drucken. Schritt 112 druckt das Bild ohne Drehung, jedoch mit der entsprechenden X-,Y- Verschiebung. Schritt 114 zeigt dann eine Meldung am Bedienpult 21 an, die die Zuschneiderichtung für die eine Kante der Seite angibt, die zugeschnitten werden muss. In einem bevorzugten Ausführungsbeispiel werden die Zuschneideanweisungen auch auf einen Nachspann gedruckt, der den fertigen Druckauftrag zur Offline-Schneidemaschine begleitet. Der Bediener der Schneidemaschine kann zum Einrichten der Schneidemaschine auf den Anweisungsbogen zurückgreifen. In Schritt 115 wird der Abschluss des Druckauftrags freigegeben.

Wenn die Antwort auf Schritt 108 negativ ausfällt, wird in Schritt 116 gefragt, ob das Maß Xf dem Quermaß entspricht, und ob Yf um mindestens das Doppelte des Druckerrandes kleiner als die Vorderkante eines verfügbaren Materials ist. Wenn die Antwort auf Schritt 116 positiv ausfällt, wird in Schritt 117 gefragt, ob die Attribute des Materials, mit Ausnahme der Größe, den Materialattributen entsprechen, die beim Einrichten des Druckauftrags eingegeben worden sind. Wenn die Antwort auf Schritt 117 positiv ausfällt, wird in Schritt 119 das ausgewählte Material angezeigt, und es wird gewartet, bis der Bediener eine Antwort eingibt. Wenn der Bediener auf Schritt 117 eine negative Antwort eingibt, werden die Schritte 116, 117 und 119 so lange wiederholt, bis der Bediener in Schritt 119 eine positive Antwort eingibt, wobei Schritt 118 den Drucker befähigt, "kantenbündig" zu drucken. Schritt 120 dreht das Bild um 90° und druckt das Bild mit der entsprechenden X-,Y-Verschiebung. Schritt 122 zeigt dann eine Meldung am Bedienpult 21 an, die die Zuschneiderichtungen für die eine Kante der Seite angibt, die zugeschnitten werden muss. In einem bevorzugten Ausführungsbeispiel werden die Zuschneideanweisungen auch auf einen Nachspann gedruckt, der den fertigen Druckauftrag zur Offline-Schneidemaschine begleitet. Der Bediener der Schneidemaschine kann zum Einrichten der Schneidemaschine auf den Anweisungsbogen zurückgreifen. In Schritt 123 wird der Abschluss des Druckauftrags freigegeben.

Wenn die Antwort auf Schritt 116 negativ ausfällt, wird in Schritt 124 gefragt, ob Xf, Yf unter Berücksichtigung des Druckerrandes auf das verfügbare Material passt. Wenn die Antwort auf Schritt 124 positiv ausfällt, wird in Schritt 125 gefragt, ob die Attribute des Materials, mit Ausnahme der Größe, den Materialattributen entsprechen, die beim Einrichten des Druckauftrags eingegeben worden sind. Wenn die Antwort auf Schritt 125 positiv ausfällt, wird in Schritt 127 das ausgewählte Material angezeigt, und es wird gewartet, bis der Bediener eine Antwort eingibt. Wenn der Bediener auf Schritt 127 eine negative Antwort eingibt, werden die Schritte 124, 125 und 127 so lange wiederholt, bis der Bediener in Schritt 127 eine positive Antwort eingibt, wobei in Schritt 126 das gewählte Material mit der entsprechenden X-,Y-Verschiebung und ggf. mit dem entsprechenden Bilddrehwinkel bedruckt wird. Schritt 128 zeigt dann eine Meldung am Bedienpult 21 an, die die Zuschneiderichtung für eine der vier Seiten des Papiers angibt. Die Zuschneideanweisungen werden von dem Rasterbildprozessor erzeugt und beinhalten die Entfernung und die Richtung, in der das Bild verschoben worden ist. In einem bevorzugten Ausführungsbeispiel werden die Zuschneideanweisungen auf einen Nachspann gedruckt, der den fertigen Druckauftrag zur Offline-Schneidemaschine begleitet. Der Bediener der Schneidemaschine kann zum Einrichten der Schneidemaschine auf den Anweisungsbogen zurückgreifen. In Schritt 129 wird der Abschluss des Druckauftrags freigegeben.

Wenn die Antwort auf Schritt 124 negativ ausfällt, wird in Schritt 130 eine Meldung am Bedienpult 21 angezeigt, die darauf hinweist, dass "Die Anfrage für das verfügbare Material zu groß ist."

Wenn der Druckauftraggeber Duplex-Druck wählt, wird die in Fig. 3 dargestellte Software aktiviert. In Schritt 200 erfolgt die Abfrage, ob der Druckauftraggeber einen Zuschnitt an den vier Kanten angefordert hat. Wenn die Antwort auf Schritt 200 positiv ausfällt, wird in Schritt 220 gefragt, ob die durch Xf und Yf bestimmte Fläche Bereich unter Berücksichtigung des Druckerrandes auf das verfügbare Material passt. Wenn die Antwort auf Schritt 220 negativ ausfällt, wird in Schritt 230 eine Meldung am Bedienpult angezeigt, die darauf hinweist, dass "Die Anfrage für das verfügbare Material zu groß ist."

Wenn die Antwort auf Schritt 220 positiv ausfällt, wird in Schritt 221 gefragt, ob die Attribute des Materials, mit Ausnahme der Größe, den Materialattributen entsprechen, die beim Einrichten des Druckauftrags eingegeben worden sind. Wenn die Antwort auf Schritt 221 positiv ausfällt, wird in Schritt 223 das ausgewählte Material angezeigt, und es wird gewartet, bis der Bediener eine Antwort eingibt. Wenn der Bediener auf Schritt 221 eine negative Antwort eingibt, werden die Schritte 220, 221 und 223 so lange wiederholt, bis der Bediener in Schritt 223 eine positive Antwort eingibt, wobei in Schritt 222 das Bild mit der entsprechenden X-,Y-Verschiebung und ggf. mit dem entsprechenden Bilddrehwinkel auf das Material gedruckt wird. Schritt 224 zeigt dann eine Meldung am Bedienpult 21 an, die Anweisungen zum Zuschneiden an den vier Seiten des Papiers beinhaltet. Die Zuschneideanweisungen werden von dem Rasterbildprozessor erzeugt und beinhalten die Entfernung und die Richtung, in der der das Bild verschoben worden ist. In einem bevorzugten Ausführungsbeispiel werden die Zuschneideanweisungen auch auf einen Nachspann gedruckt, der den fertigen Druckauftrag zur Offline-Schneidemaschine begleitet. Der Bediener der Schneidemaschine kann zum Einrichten der Schneidemaschine auf den Anweisungsbogen zurückgreifen. In Schritt 225 wird der Abschluss des Druckauftrags freigegeben.

Wenn die Antwort auf Schritt 200 negativ ausfällt, wird in Schritt 202 gefragt, ob das Maß Xf dem Quermaß eines verfügbaren Materials entspricht, und ob Yf um mindestens das Doppelte des Druckerrandes kleiner als die Vorderkante des Papiers ist. Wenn die Antwort auf Schritt 202 positiv ausfällt, wird in Schritt 203 gefragt, ob die Attribute des Materials, mit Ausnahme der Größe, den Materialattributen entsprechen, die beim Einrichten des Druckauftrags eingegeben worden sind. Wenn die Antwort auf Schritt 203 positiv ausfällt, wird in Schritt 205 das ausgewählte Material angezeigt, und es wird gewartet, bis der Bediener eine Antwort eingibt. Wenn der Bediener auf Schritt 203 eine negative Antwort eingibt, werden die Schritte 202, 203 und 205 so lange wiederholt, bis der Bediener in Schritt 205 eine positive Antwort eingibt, wobei Schritt 204 den Drucker befähigt, "bis zur äußersten Kante" zu drucken. Schritt 206 dreht das Bild um 90° und druckt das Bild mit der entsprechenden X-,Y-Verschiebung. Schritt 208 zeigt dann eine Meldung am Bedienpult 21 an, die die Zuschneiderichtung für die beiden Kanten der Seite angibt, die zugeschnitten werden müssen. In einem bevorzugten Ausführungsbeispiel werden die Zuschneideanweisungen auch auf einen Nachspann gedruckt, der den fertigen Druckauftrag zur Offline-Schneidemaschine begleitet. Der Bediener der Schneidemaschine kann zum Einrichten der Schneidemaschine auf den Anweisungsbogen zurückgreifen. In Schritt 209 wird der Abschluss des Druckauftrags freigegeben.

Wenn die Antwort auf Schritt 202 negativ ausfällt, wird in Schritt 210 gefragt, ob das Maß Yf dem Quermaß eines verfügbaren Materials entspricht, und ob Xf um mindestens das Doppelte des Druckerrandes kleiner als die Vorderkante des Papiers ist. Wenn die Antwort auf Schritt 210 positiv ausfällt, wird in Schritt 211 gefragt, ob die Attribute des Materials, mit Ausnahme der Größe, den Materialattributen entsprechen, die beim Einrichten des Druckauftrags eingegeben worden sind. Wenn die Antwort auf Schritt 211 positiv ausfällt, wird in Schritt 213 das ausgewählte Material angezeigt, und es wird gewartet, bis der Bediener eine Antwort eingibt. Wenn der Bediener auf Schritt 211 eine negative Antwort eingibt, werden die Schritte 210, 211 und 213 so lange wiederholt, bis der Bediener in Schritt 213 eine positive Antwort eingibt, worauf Schritt 212 den Drucker befähigt, "kantenbündig" zu drucken. Schritt 214 druckt das Bild ohne Drehung, jedoch mit der entsprechenden X-,Y-Verschiebung. Schritt 216 zeigt dann eine Meldung am Bedienpult 21 an, die die Zuschneiderichtung für die beiden Kanten der Seite angibt, die zugeschnitten werden müssen. In einem bevorzugten Ausführungsbeispiel werden die Zuschneideanweisungen auch auf einen Nachspann gedruckt, der den fertigen Druckauftrag zur Offline-Schneidemaschine begleitet. Der Bediener der Schneidemaschine kann zum Einrichten der Schneidemaschine auf den Anweisungsbogen zurückgreifen. In Schritt 217 wird der Abschluss des Druckauftrags freigegeben.

Wenn die Antwort auf Schritt 210 negativ ausfällt, wird in Schritt 220 gefragt, ob die durch Xf,Yf bestimmte Fläche unter Berücksichtigung des Druckerrandes auf das verfügbare Material passt. Wenn die Antwort auf Schritt 220 negativ ausfällt, wird in Schritt 230 eine Meldung am Bedienpult angezeigt, die darauf hinweist, dass "Die Anfrage für das verfügbare Material zu groß ist."

Wenn die Antwort auf Schritt 220 positiv ausfällt, wird in Schritt 221 gefragt, ob die Attribute des Materials, mit Ausnahme der Größe, den Materialattributen entsprechen, die beim Einrichten des Druckauftrags eingegeben worden sind. Wenn die Antwort auf Schritt 221 positiv ausfällt, wird in Schritt 223 das ausgewählte Material angezeigt, und es wird gewartet, bis der Bediener eine Antwort eingibt. Wenn der Bediener auf Schritt 221 eine negative Antwort eingibt, werden die Schritte 220, 221 und 223 so lange wiederholt, bis der Bediener in Schritt 223 eine positive Antwort eingibt, wobei in Schritt 222 das Bild mit der entsprechenden X-,Y-Verschiebung und ggf. mit dem entsprechenden Bilddrehwinkel auf das Material gedruckt wird. Schritt 224 zeigt dann eine Meldung am Bedienpult 21 an, die Anweisungen zum Zuschneiden an den vier Seiten des Papiers beinhaltet. Die Zuschneideanweisungen werden von dem Rasterbildprozessor erzeugt und beinhalten die Entfernung und die Richtung, in der der das Bild verschoben worden ist. In einem bevorzugten Ausführungsbeispiel werden die Zuschneideanweisungen auch auf einen Nachspann gedruckt, der den fertigen Druckauftrag zur Offline-Schneidemaschine begleitet. Der Bediener der Schneidemaschine kann zum Einrichten der Schneidemaschine auf den Anweisungsbogen zurückgreifen. In Schritt 225 wird der Abschluss des Druckauftrags freigegeben.

Der Betrieb der vorliegenden Erfindung lässt sich anhand eines Beispiels darstellen, in dem der Kunde eine fertige, gedruckte Ausgabe der Größe 7 x 9 Zoll (17,78 x 22,86 cm) wünscht, d.h. Xf=7 Zoll und Yf=9 Zoll, und zwar ohne unbedruckte Ränder. Das verfügbare Material umfasst Papier der Größe 8,5 x 11 Zoll (21,59 x 27,94 cm) in weiß und blau, 11 x 14 Zoll (27,94 x 35,56 cm) in weiß sowie 11 x 17 Zoll (27,94 x 43,18 cm) in weiß und blau. Der Bediener gibt bestimmte Parameter des Druckauftrags ein, u.a. wählt er blaue Duplex-Ausgabe, 7 x 9 Zoll (17,78 x 22,86 cm) Originalgröße und vollautomatischen Betrieb.

Der Bediener gibt auf Schritt 200 eine negative Antwort ein und wählt "zwingend 4 Kanten schneiden" ab. In Schritt 202 wird dann das Maß Xf mit dem Quermaß des verfügbaren Materials verglichen, wobei ermittelt wird, dass Xf=9 nicht dem Quermaß eines verfügbaren Materials entspricht. In Schritt 210 wird das Maß Yf mit dem Quermaß des verfügbaren Materials verglichen, wobei ermittelt wird, dass Yf=7 nicht dem Quermaß eines verfügbaren Materials entspricht. Schritt 210 vergleicht Xf,Yf mit dem verfügbaren Material, ermittelt die beste Passung auf dem Material der Größe 8,5 x 11 Zoll (21,59 x 27,94 cm), wobei das Bild mit einer Drehung um 90° und einer Verschiebung von 0,75 Zoll (1,905 cm) zur Mitte der Seite von der Hinterkante platziert wird, und mit einer Verschiebung von 1 Zoll (2,54 cm) zur Mitte der Seite von den Seitenkanten; gewählt wird weißes Papier der Größe 8,5 x 11 Zoll (21,59 x 27,94 cm). Schritt 211 vergleicht die Attribute des Materials, mit Ausnahme der Größe, mit den Materialattributen, die beim Einrichten des Druckauftrags eingegeben worden sind, wobei in diesem Fall festgestellt wird, dass das Farbattribut des automatisch gewählten Papiers, also weiß, nicht dem vom Bediener eingegebenen Farbattribut, nämlich blau, entspricht. Schritt 210 wird daher wiederholt, worauf das Material derselben Größe mit derselben Verschiebung und Drehung, jedoch in blau gewählt wird. Schritt 213 zeigt das ausgewählte Material an, und es wird gewartet, bis der Bediener eine Antwort eingibt. Der Bediener prüft das gewählte Material und gibt auf Schritt 213 eine positive Antwort ein, worauf in Schritt 212 das Bild mit der entsprechenden X-,Y-Verschiebung und dem entsprechenden Bilddrehwinkel auf das gewählte Material gedruckt wird. In Schritt 214 wird eine Meldung am Bedienpult 21 angezeigt, die Anweisungen zum Zuschneiden an den vier Seiten des Papiers beinhaltet. Die Zuschneideanweisungen werden auf einen Nachspann gedruckt, der den fertigen Druckauftrag zur Offline-Schneidemaschine begleitet. In einem anderen bevorzugten Ausführungsbeispiel, wenn eine Inline-Schneidemaschine mit dem Drucker verbunden ist, können die Zuschneideanweisungen direkt an die Schneidemaschine gesendet werden, um das Zuschneiden automatisch durchführen. In Schritt 217 wird der Abschluss des Druckauftrags freigegeben.

Im Betrieb werden Bildverschiebung und Drehung durch herkömmliche Verfahren durchgeführt, die nach dem Stand der Technik bekannt sind, beispielsweise durch Manipulation der Rasterbilddaten. In einem bevorzugten Ausführungsbeispiel wird das Verfahren beispielsweise in einem konventionellen Kopierer eingesetzt, der mit einer rotierenden Endlosfilmbahn ausgestattet ist, von der Bilder auf Papiermaterial durch Aktivieren einer Blitzlampe zur Fixierung des Toners auf dem Papier reproduzierbar sind. Durch Variieren der Blitzzeiten in Bezug auf die Drehungen der Filmbahn lässt sich das Bild näher oder weiter entfernt zur Vorderkante des Papiermaterials anordnen.

Die Erfindung ist zudem in einem Drucker verwertbar, der mit einem Schreibkopf und einer Vielzahl von Leuchtdioden 44 ausgestattet ist, die ansprechbar sind, um das Bild auf Papier zu drucken. In einer derartigen Konfiguration lässt sich die Lage des Bildes dadurch verschieben, dass unterschiedliche Leuchtdioden 44 des Schreibkopfs durch die Schreibkopf-Befehlscodes aktiviert werden. Die Lage des Druckbereichs auf dem Papiermaterial lässt sich durch Aktivieren eines Blocks von Leuchtdioden 44 verschieben, die näher oder weiter entfernt zur Vorderkante und/oder zur Seitenkante des Papiermaterials angeordnet sind.

Bildverschiebung und Bilddrehung lassen sich schließlich auch mit einem Drucksoftwareprogramm durchführen, beispielsweise PostScript, das die Markierungseinrichtung anweist, die entsprechende Bildverschiebung und Drehung vorzusehen. Derartige Programme sehen normalerweise eine Bildverschiebung relativ zu einem Bezugspunkt vor, beispielsweise zu den Ecken des Bildbereichs.

Obwohl die Erfindung mit besonderem Bezug auf bevorzugte Ausführungsbeispiele beschrieben wurde, ist die Erfindung nicht darauf beschränkt, sondern kann innerhalb des Geltungsbereichs der anhängenden Ansprüche Änderungen und Abwandlungen unterzogen werden.

### Bezugszeichen

- 10: Druckvorrichtung
- 20: Drucker
- 21: Bedienpult
- 22: Netzschnittstelle
- 23: Mehrseiten-Bildspeicher
- 28: Netz
- 26: Rasterbildprozessor
- 30: Verarbeitungseinheit
- 32: Druckauftragsspeicher
- 40: Markierungseinrichtung
- 42: Druckkopf
- 44: Leuchtdioden

## Patentansprüche

1. Verfahren zum automatischen Auslegen eines Druckauftrags zum Drucken auf einem Drucker, der mit einer Vielzahl verfügbarer Materialgrößen bestückt ist, wobei der Druckauftrag einen bezeichneten Druckbereich umfasst, der durch die bezeichnete Länge und Breite der fertigen Druckausgabe bestimmt ist, wobei das Verfahren folgende Schritte umfasst:
a. Einrichten des Druckauftrags, wobei der Druckauftrag Daten zur Bezeichnung der Länge und Breite der fertigen Druckausgabe umfasst;
b. Ermitteln, ob der Druckbereich kleiner als eine verfügbare Materialgröße ist;
c. Befähigen des Druckers, kantenbündig zu drucken;
d. Ermitteln, ob der Druckbereich gedreht werden muss, um den Druckbereich in eine verfügbare Materialgröße einzupassen;
e. automatisches Auswählen einer Materialgröße aus den verfügbaren Materialien;
**gekennzeichnet durch** die Schritte:
f. automatisches Berechnen der Entfernung und Richtung, in der der Druckbereich verschoben werden muss, um den Druckbereich auf dem Material in einer Weise anzuordnen, dass die Bildlage auf dem ausgewählten Material optimiert ist, um das Zuschneiden nach dem Bedrucken zu minimieren;
g. Drucken des Druckauftrags mit der berechneten Bildbereichsverschiebung und der Bildbereichsdrehung.

2. Verfahren nach Anspruch 1, **dadurch gekennzeichnet, dass** die Druckausgabe einseitig ist.

3. Verfahren nach Anspruch 1, **dadurch gekennzeichnet, dass** die Druckausgabe beidseitig ist.

4. Verfahren nach Anspruch 1, **dadurch gekennzeichnet, dass** der Drucker befähigt ist, vier Kanten des Materials kantenbündig zu bedrucken.

5. Verfahren nach Anspruch 1, **dadurch gekennzeichnet, dass** der Drucker befähigt ist, drei Kanten kantenbündig zu bedrucken und dass an einer Kante des Materials ein Druckerrand benötigt wird, der automatisch bei der Bestimmung der geeigneten Druckbereichsverschiebung und der Druckbereichsdrehung berücksichtigt wird.

6. Verfahren nach Anspruch 3, **dadurch gekennzeichnet, dass** der Druckerrand an der Vorderkante angeordnet ist.

7. Verfahren nach Anspruch 1, **gekennzeichnet durch** die Schritte:
a. Drucken eines Anweisungsbogens, der den Druckauftrag begleitet und der Anweisungen zum Einrichten einer dem Druckvorgang nachgeordneten Schneidevorrichtung umfasst.

8. Verfahren nach Anspruch 1, **dadurch gekennzeichnet, dass** Zuschneideanweisungen an eine Schneidevorrichtung übergeben werden, die mit dem Drucker verbunden ist.

9. Verfahren nach Anspruch 5, **dadurch gekennzeichnet, dass** die Druckausgabe einseitig ist.

10. Verfahren nach Anspruch 5, **dadurch gekennzeichnet, dass** die Druckausgabe beidseitig ist.

## Claims

1. Method of automatically laying out a print job for printing on a printer being loaded with a plurality of available media sizes, wherein the print job includes a designated print area, defined by the designated length and width of the finished printed output, the method comprising the following steps:
a. setting up the print job, the print job comprising data denoting the length and width of the finished output;
b. determining whether the print area is smaller than an available media size;
c. enabling the printer to print full-bleed;
d. determining whether the print area must be rotated to fit the print area on an available media size;
e. automatically selecting a media size from available materials;
**characterized by** the following steps:
f. automatically calculating the distance and direction the print area must be shifted to locate the print area on the media in such a manner as to optimize the image location on the selected media for minimizing post-printing trimming;
g. printing the print job with the calculated image area shift and image area rotation.

2. Method as in Claim 1, **characterized in that** the printed output is single-sided.

3. Method as in Claim 1, **characterized in that** the printed output is double-sided.

4. Method as in Claim 1, **characterized in that** the printer is capable of full-bleed printing on four edges of the media.

5. Method as in Claim 1, **characterized in that** the printer is capable of full-bleed printing on three edges and requires a printer margin on one edge of the media, and the printer margin is automatically accounted for in determining the appropriate print area shift and print area rotation.

6. Method as in Claim 3, **characterized in that** the printer margin is on the leading edge.

7. Method as in Claim 1, **characterized by** the following step:
a. printing an instruction sheet accompanying the print job that comprises instructions for setting up a post-printing trimming device.

8. Method as in Claim 1, **characterized in that** the trimming instructions are sent to a trimming device connected to the printer.

9. Method as in Claim 5, **characterized in that** the printed output is single-sided.

10. Method as in Claim 5, **characterized in that** the printed output is double sided.

## Revendications

1. Procédé de mise en place automatique d'une tâche d'impression sur une imprimante équipée d'un grand nombre de supports de tailles différentes, ledit support d'impression comprenant une plage d'impression donnée déterminée par la longueur et la largeur données de l'image imprimée finie, le procédé comprenant les étapes suivantes :
(a) réglage du support d'impression, le support d'impression comprenant des données d'indication de la longueur et de la largeur de l'image imprimée finie ;
(b) détermination si la plage d'impression est inférieure ou non à un format disponible ;
(c) autorisation de l'imprimante d'imprimer l'image jusqu'aux bords ;
(d) détermination si une rotation de la plage d'impression est nécessaire ou non pour adapter la plage d'impression à un format disponible ;
(e) sélection automatique d'un format de support parmi les formats disponibles ; **caractérisé par** les étapes :
(f) calcul automatique de la distance et de la direction dans lesquelles la plage d'impression doit être décalée pour disposer la plage d'impression sur le support de façon à optimiser la position de l'image sur le support sélectionné afin de minimiser les opérations de découpage après impression ;
(g) impression de l'image sur le support en tenant compte de la valeur calculée du décalage et de la rotation de la plage d'impression.

2. Procédé selon la revendication 1, **caractérisé en ce que** l'impression se fait de manière unilatérale (simplex).

3. Procédé selon la revendication 1, **caractérisé en ce que** l'impression se fait de manière bilatérale (duplex).

4. Procédé selon la revendication 1, **caractérisé en ce que** l'imprimante est capable d'imprimer des images jusqu'au bord sur les 4 côtés du support.

5. Procédé selon la revendication 1, **caractérisé en ce que** l'imprimante est capable d'imprimer des images jusqu'au bord sur 3 côtés, tandis que l'un des bords est requis pour être automatiquement pris en compte lors de la détermination du décalage et de la rotation appropriés de la plage d'impression.

6. Procédé selon la revendication 3, **caractérisé en ce que** le bord d'impression est disposé au niveau du bord avant.

7. Procédé selon la revendication 1, **caractérisé par** les étapes :
(a) impression d'une feuille d'instruction accompagnant le support d'impression et comprenant des instructions relatives au réglage d'un dispositif de découpage disposé en aval de l'imprimante.

8. Procédé selon la revendication 1, **caractérisé en ce que** les instructions de découpage sont transmises à un dispositif de découpage relié à l'imprimante.

9. Procédé selon la revendication 5, **caractérisé en ce que** l'impression est unilatérale (simplex).

10. Procédé selon la revendication 5, **caractérisé en ce que** l'impression est bilatérale (duplex).
